# FASCICULE DE BREVET EUROPEEN

(11) **EP 0 441 669 B1**
(45) Date de publication et mention de la délivrance du brevet: **01.12.1993**
(21) Numéro de dépôt: 91400128.4
(22) Date de dépôt: 21.01.1991
(51) Int. Cl.: B64G 1/44

(54) **Système pour maintenir, en position repliée, un ensemble d'éléments déployables sur un engin spatial**
Niederhaltersystem für entklappbare Elemente an einem Raumflugkörper
System for retaining a number of articulated elements on a spacecraft

(30) Priorité: 06.02.1990 FR 9001352
(43) Date de publication de la demande: 14.08.1991
(73) Titulaire: AEROSPATIALE Société Nationale Industrielle, 75781 Paris Cédex 16 (FR)
(72) Inventeur: Viale, Daniel, Tanneron, F-83440 Fayence (FR)
(74) Mandataire: Bonnetat, Christian

(56) Documents cités:
- FR-A- 2 443 383
- US-A- 3 291 423
- US-A- 3 553 984

## Description

La présente invention concerne un système pour maintenir, en position repliée, un ensemble d'éléments déployables, articulés entre eux et sur une structure.

Plus particulièrement, quoique non exclusivement, le système selon l'invention est destiné à maintenir en position repliée un ensemble de panneaux solaires équipant des engins spatiaux, tels que notamment les satellites artificiels. Ainsi, dans la position repliée, les éléments forment un empilement en zig-zag, tandis que, dans la position déployée, après l'effacement du système de retenue, lesdits éléments sont alignés les uns au bout des autres, l'élément le plus proche de la structure étant articulé sur celle-ci.

Lors du lancement de l'engin spatial par une fusée porteuse ou une navette spatiale, ces éléments, qui peuvent être des panneaux solaires de plusieurs mètres carrés, doivent être étroitement repliés et appliqués contre la structure dudit engin spatial en y étant maintenus durant toute la phase de lancement et de mise sur orbite.

Pour maintenir les éléments repliés, on utilise des systèmes appropriés qui, lorsqu'ils sont télécommandés depuis la Terre, autorisent le déploiement des éléments.

Généralement, les systèmes de maintien comprennent :
- un organe de retenue, traversant perpendiculairement lesdits éléments en position repliée, une première extrémité de l'organe de retenue étant reliée à la structure de l'engin spatial, tandis que sa seconde extrémité vient en appui contre l'élément externe dudit ensemble ;
- des moyens pour verrouiller l'organe de retenue, en position repliée desdits éléments ; et,
- des moyens de commande pour déverrouiller lesdits moyens de verrouillage et libérer ledit organe de retenue, permettant ainsi audit en semble d'éléments de passer de la position repliée à la position déployée sous l'action, par exemple, de ressorts incorporés au niveau de leurs articulations.

Dans la réalisation enseignée par le document FR-A-2 443 383, les moyens de verrouillage du système de maintien comprennent notamment un axe d'arrêt agencé perpendiculairement à l'organe de retenue et s'engageant, par l'une de ses extrémités qui présente une surface oblique, dans une échancrure latérale ménagée dans la première extrémité de l'organe de retenue et pourvue d'une surface oblique complémentaire. L'organe de retenue et l'axe d'arrêt sont logés respectivement dans des alésages ménagés dans un boîtier solidaire de la structure de l'engin spatial. Par ailleurs, des éléments de blocage libérables sont associés à l'axe d'arrêt en empêchant son recul. Lorsque ces éléments de blocage sont commandés, l'axe d'arrêt, sous l'action d'un ressort, se désengage de l'organe de retenue en le libérant, ce qui permet le passage des panneaux solaires vers leur position déployée.

Toutefois, cette solution technique est mécaniquement peu satisfaisante et peut ne pas garantir une libération appropriée de l'organe de retenue. En effet, la première extrémité de l'organe de retenue est maintenue par les moyens de verouillage de façon asymétrique, ce qui peut conduire à un désalignement de l'organe de retenue lors de sa libération. Par ailleurs, les liaisons entre les surfaces obliques de l'axe d'arrêt et de l'organe de retenue, et entre l'organe de retenue et l'alésage correspondant impliquent des frottements élevés qui risquent d'empêcher la libération de l'organe de retenue.

La présente invention a pour but de remédier à ces inconvénients et concerne un système pour maintenir en position repliée un ensemble d'éléments, dont la conception des moyens de verrouillage garantit, lorsqu'ils sont actionnés, une libération parfaite de l'organe de retenue.

A cet effet, le système pour maintenir, en position repliée, un ensemble d'éléments, tels que des panneaux solaires d'engins spatiaux, articulés entre eux et sur une structure, et susceptibles d'occuper soit ladite position repliée, pour laquelle lesdits éléments forment un empilement, soit une position déployée, pour laquelle lesdits éléments sont alignés les uns au bout des autres, ledit système comprenant :
- un organe de retenue traversant lesdits éléments en position repliée et relié par la première de ses extrémités à ladite structure et venant, par sa seconde extrémité, en appui contre l'élément externe dudit ensemble ;
- des moyens de verrouillage dudit organe de retenue en position repliée desdits éléments ; et,
- des moyens de commande pour déverrouiller lesdits moyens de verrouillage et libérer ledit organe de retenue, permettant audit ensemble d'éléments de passer de la position repliée à la position déployée, est remarquable, selon l'invention, en ce que lesdits moyens de verrouillage comprennent une pluralité de billes régulièrement réparties autour de la première extrémité dudit organe de retenue et s'engageant respectivement dans des empreintes sphériques ménagées autour de ladite première extrémité, et en ce que lesdits moyens de commande comportent une pièce formant came, coaxiale audit organe de retenue et susceptible d'occuper une première position, pour laquelle lesdites billes sont pressées ponctuellement par la pièce formant came dans les empreintes sphériques dudit organe de retenue en le verrouillant, et, une seconde position, pour laquelle les billes sont éloignées des empreintes sphériques dudit organe de retenue en le libérant.

Ainsi, comme l'organe de retenue est maintenu par une pluralité de billes régulièrement réparties autour de sa première extrémité, la libération de celui-ci, lorsque lesdites billes s'effacent simultanément, s'effectue sans encombre. Par ailleurs, l'usage de billes limite considérablement les frottements puisqu'ils sont alors uniquement ponctuels.

Dans un mode préféré de réalisation, deux jeux identiques de n billes montées en série sont disposés de façon diamètralement opposée l'un de l'autre par rapport audit organe de retenue et coopèrent respectivement, dans la première position de la pièce formant came, avec deux empreintes sphériques ménagées en opposition autour de ladite première extrémité de l'organe de retenue.

Avantageusement, lesdites billes de verrouillage sont logées dans des passages ménagés dans un corps qui est fixé à ladite structure et dans lequel sont agencées la pièce formant came et la première extrémité de l'organe de retenue, chacun des passages débouchant d'une part, en regard de ladite pièce formant came et, d'autre part, en regard de l'empreinte sphérique correspondante.

Dans ce mode de réalisation, les deux jeux de billes sont alors respectivement reçus dans deux passages coudés symétriques l'un de l'autre par rapport à l'organe de retenue, la première bille de chaque jeu étant au contact ponctuel de la pièce formant came selon une direction parallèle à l'organe de retenue, tandis que la dernière bille de chaque jeu est appliquée contre l'empreinte sphérique correspondante selon une direction radiale à l'organe de retenue, lorsque la pièce formant came est dans sa première position.

De préférence, ladite pièce formant came présente une forme cylindrique dont l'une des faces transversales, orthogonale à l'organe de retenue, est pourvue d'encoches régulièrement réparties, lesdites billes de verrouillage, lorsque la pièce formant came occupe sa première position, étant appliquées sur ladite face, tandis que, lorsque ladite pièce formant came est commandée en rotation pour passer de sa première à sa seconde position, lesdites billes s'effacent simultanément pour être reçues dans lesdites encoches en libérant ledit organe de retenue. La longueur de l'arc de chaque encoche correspond alors au moins à la somme des diamètres de chaque jeu de billes.

Par ailleurs, lesdits moyens de commande peuvent comprendre, de plus, un ressort de torsion lié à ladite pièce formant came et à ladite structure, et, un maneton fixé radialement à la pièce formant came et relié à la structure par l'intermédiaire de moyens de rupture commandables. Ainsi, lorsque les moyens de rupture, par exemple du type pyrotechnique, sont actionnés, le ressort de torsion initialement précontraint se détend et provoque la rotation de la pièce formant came, qui passe de sa première à sa seconde position, en entraînant simultanément l'éloignement des billes desdites empreintes sphériques et leur réception dans les encoches de la came, et la libération de l'organe de retenue tiré lui-même vers l'extérieur par des moyens élastiques moteurs. De la sorte, les panneaux solaires passent à leur tour de leur position repliée vers leur position déployée sous l'action, par exemple, de ressorts incorporés aux articulations.

Avantageusement, pour faciliter la rotation de la pièce formant came et réduire les efforts de déverrouillage, celle-ci est montée rotative sur une butée à billes. Dans ce cas, ladite butée à billes coopère avec l'autre face transversale de la pièce formant came, opposée à celle présentant lesdites encoches. En outre, lesdites empreintes sphériques peuvent être ménagées sur un embout rapporté sur la première extrémité dudit organe de retenue.

Par ailleurs, des moyens pour régler la position des billes dans les passages sont prévus sur ledit corps. Avantageusement, ces moyens sont constitués par des vis liées au corps et destinées à agir sur les billes, deux desdites vis, disposées orthogonalement l'une de l'autre, agissant, selon respectivement des directions radiale et axiale à l'organe de retenue, sur la bille de chaque jeu située dans l'angle du passage coudé correspondant, de façon que les billes de chaque jeu soient ponctuellement au contact les unes des autres.

Par ailleurs, comme les panneaux solaires peuvent présenter des dimensions élevées, il est nécessaire, dans ce cas, de prévoir plusieurs systèmes pour maintenir lesdits panneaux en position repliée.

A cet effet, la présente invention concerne également un ensemble de systèmes du type défini ci-dessus, répartis sur ladite structure pour maintenir en position repliée lesdits éléments, tels que les panneaux solaires d'engins spatiaux, ledit ensemble de systèmes étant remarquable en ce que les moyens pour la commande des moyens de verrouillage desdits systèmes sont associés les uns aux autres par au moins un câble lié à la structure et comportant des moyens de rupture.

Avantageusement, ledit câble est relié à l'ensemble des manetons desdits systèmes, de sorte que, lorsque ledit câble est rompu sous l'action des moyens de rupture, tels qu'un dispositif pyrotechnique, les ressorts de torsion desdits systèmes en traînent simultanément en rotation les pièces formant came et l'éloignement des billes des empreintes sphériques ménagées dans lesdits organes de retenue.

On remarquera, que pour faire fonctionner l'ensemble des systèmes grâce au câble, un seul dispositif pyrotechnique est suffisant comme moyens de rupture.

De préférence, deux groupes de systèmes sont prévus sur ladite structure pour maintenir en position repliée lesdits éléments et ils sont chacun commandés par un câble respectif, lesdits câbles étant reliés par une de leurs extrémités à un câble unique, sur lequel sont agencés lesdits moyens de rupture, tandis que leurs autres extrémités sont reliées à ladite structure par l'intermédiaire de ressorts de traction respectifs.

Ainsi, ces ressorts de traction, lorsque ledit câble unique est rompu, participent à la rotation des pièces formant came en assurant une redondance avec les ressorts de torsion.

Les figures du dessin annexé feront bien comprendre comment l'invention peut être réalisée. Sur ces figures, des références identiques désignent des éléments semblables.

La figure 1 illustre schématiquement un satellite artificiel équipé de deux ensembles de panneaux solaires immobilisés en position repliée grâce aux systèmes de maintien selon l'invention.

La figure 2 représente une coupe longitudinale d'un exemple préféré de réalisation du système conforme à l'invention, dans une première position pour laquelle l'organe de retenue dudit système est verrouillé en immobilisant lesdits panneaux solaires en position repliée.

Les figures 3 et 4 sont des vues en coupe dudit système respectivement selon les lignes III-III et IV-IV de la figure 2.

La figure 5 est une vue en perspective de la pièce formant came dudit système.

La figure 6 illustre schématiquement en vue de dessus un ensemble de systèmes de maintien immobilisant en position repliée les panneaux solaires.

La figure 7 représente en coupe le système de la figure 2, correspondant à l'un des systèmes de la figure 6, dans la seconde position pour laquelle l'organe de retenue est libéré autorisant le passage des panneaux solaires de la position repliée à la position déployée.

La figure 8 est une coupe dudit système selon la ligne VIII-VIII de la figure 7.

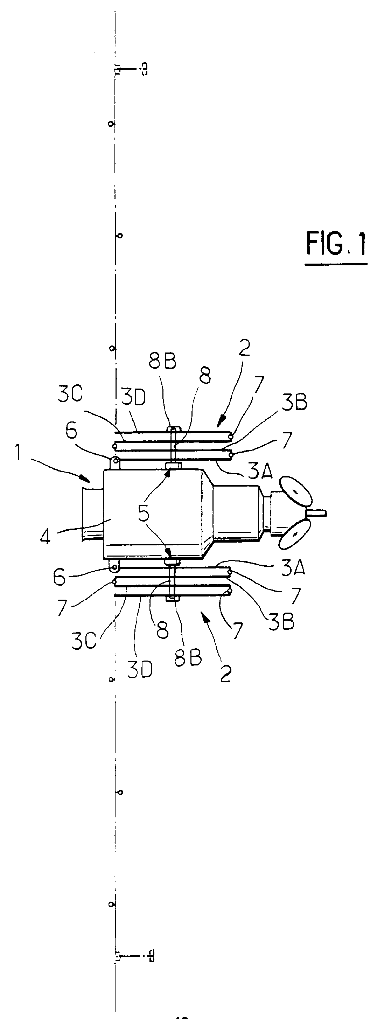

Le satellite artificiel 1 représenté sur la figure 1 est équipé, par exemple, de deux ensembles identiques 2 de panneaux solaires 3A,3B,3C et 3D, chaque ensemble 2 de panneaux occupant, par rapport à la structure 4 du satellite, une position repliée en zig-zag et étant verrouillé dans cette position par au moins un système de maintien 5 conforme à l'invention.

Le panneau interne 3A de chaque ensemble 2 est lié en rotation à la structure 4 du satellite 1 par une articulation 6, et les panneaux 3A,3B,3C et 3D sont eux-mêmes reliés les uns aux autres par des articulations 7. Les panneaux solaires sont pourvus sur l'une de leurs faces de cellules solaires, non représentées, de façon que, lorsque les panneaux desdits ensembles (illustrés alors en traits mixtes sur la figure 1) sont en position déployée en étant alignés les uns au bout des autres après le déverrouillage des systèmes de maintien 5, les cellules solaires soient orientées vers le soleil.

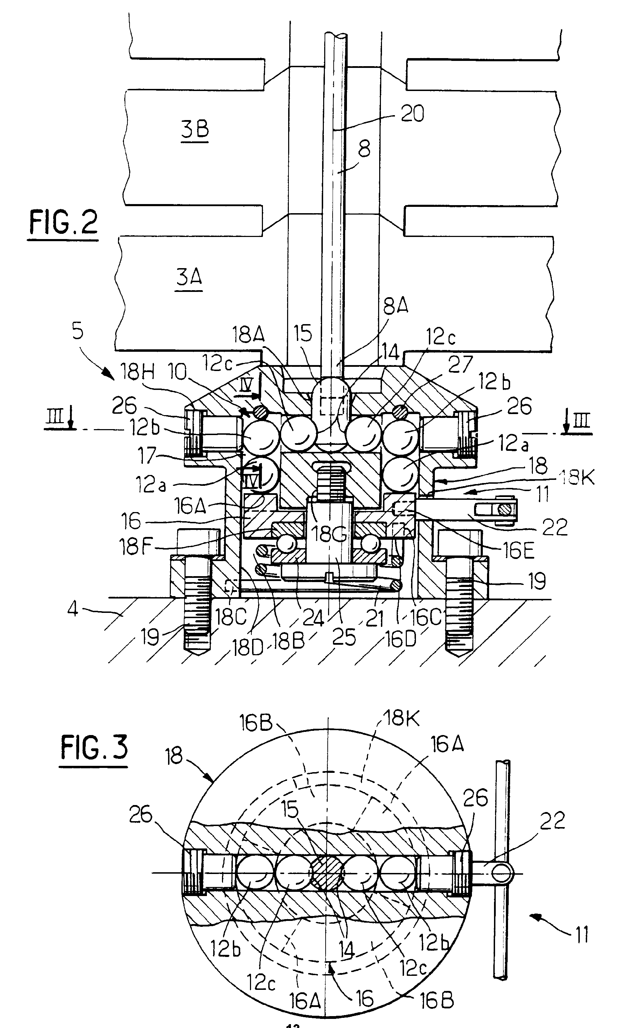

Sur la figure 2, chaque système de maintien 5 représenté comprend :
- un organe de retenue 8, traversant perpendiculairement les panneaux 3A,3B,3C et 3D en position repliée et reliée par la première 8A de ses extrémités à la structure 4 du satellite 1 et venant, par sa seconde extrémité 8B (figure 1) en appui contre le panneau solaire externe 3D de l'ensemble correspondant 2 en maintenant ainsi les panneaux pressés les uns contre les autres ;
- des moyens de verrouillage 10 de l'organe de retenue 8 en position repliée desdits panneaux ; et,
- des moyens de commande 11 pour déverrouiller les moyens de verrouillage 10 et libérer ainsi l'organe de retenue 8, ce qui permet à chaque ensemble de panneaux solaires de passer de la position repliée à la position déployée sous l'action, par exemple, de ressorts incorporés dans les articulations 7 et non spécifiquement représentés.

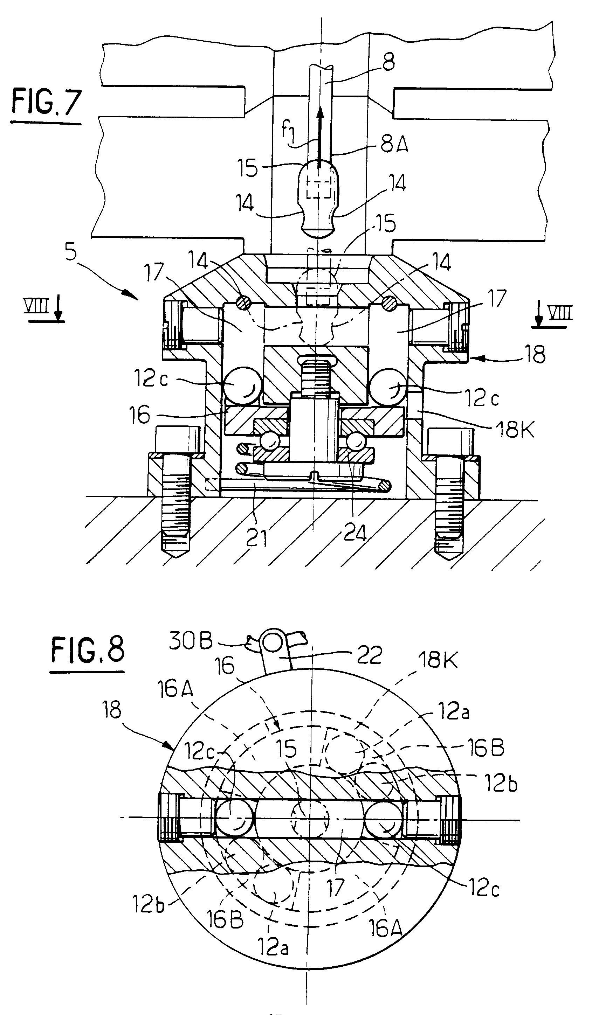

Selon l'invention, les moyens de verrouillage 10 comprennent des billes 12 régulièrement réparties autour de l'organe de retenue 8 et s'engageant respectivement dans des empreintes sphériques 14 ménagées, dans cet exemple de réalisation, dans un embout 15 qui prolonge la première extrémité 8A de l'organe de retenue 8, en y étant vissé. Les moyens de commande 11 comportent alors notamment une pièce formant came 16, coaxiale audit organe de retenue et susceptible d'occuper une première position, illustrée sur la figure 2, pour laquelle les billes 12 sont pressées ponctuellement par la pièce 16 dans les empreintes sphériques 14 en verrouillant l'organe de retenue, et, une seconde position, pour laquelle les billes 12 sont éloignées des empreintes sphériques 14 en libérant alors l'organe de retenue 8, comme on le voit sur les figures 7 et 8.

Dans le mode de réalisation illustré en regard des figures 2 et 3, deux jeux identiques de trois billes 12a,12b et 12c chacun sont disposés de façon diamétralement opposée l'un de l'autre par rapport à l'organe de retenue 8. On voit ainsi sur ces figures que les billes 12c coopèrent avec deux empreintes sphériques 14 ménagées en opposition autour de l'embout 15 vissé à la première extrémité de l'organe 8. Ces billes 12c sont poussées ponctuellement, dans les empreintes, par les billes intermédiaires 12b qui sont à leur tour poussées ponctuellement par les billes 12a elles-mêmes au contact de la pièce formant came 16.

Les jeux de billes sont logés respectivement dans des passages 17 ménagés dans un corps 18 de révolution qui est fixé à la structure 4 du satellite par des vis 19. L'embout 15, prolongeant l'organe de retenue 8, est introduit dans un perçage 18A ménagé dans l'axe géométrique 20 du corps 18, tandis que la pièce formant came 16 de forme générale cylindrique est logée de façon rotative à l'axe 20 dans une cavité cylindrique 18B prévue dans le corps 18. Dans le mode de réalisation illustré sur la figure 2, les deux passages 17 sont coudés en étant agencés symétriquement à l'axe géométrique 20 du corps 18, avec lequel est confondu dans cette position l'organe de retenue 8. Les deux passages coudés 17 débouchent d'une part, en regard des empreintes sphériques 14 ménagées dans l'embout 15, et d'autre part, en regard de l'une 16A des faces transversales de la pièce 16. On voit donc sur la figure 2, que la première bille 12a de chaque jeu est au contact ponctuel de la face transversale 16A de la pièce 16 selon une direction parallèle à l'organe de retenue, correspondant à l'axe 20, tandis que la troisième bille 12c de chaque jeu est appliquée contre l'empreinte sphérique correspondante 14, selon une direction radiale à l'organe de retenue, perpendiculaire à l'axe 20. La deuxième bille 12b ou bille intermédiaire de chaque jeu, disposée au niveau de l'angle du passage coudé, est au contact des première et troisième billes 12a et 12c grâce à des moyens de réglage qui seront décrits ultérieurement.

La pièce formant came 16 représentée plus particulièrement sur la figure 5 est pourvue de deux encoches 16B ménagées dans sa face transversale. Les encoches 16B présentent une forme arquée et sont disposées symétriquement l'une de l'autre par rapport à l'axe géométrique de la pièce de révolution formant came 16. On a par ailleurs représenté par la référence P les points de contact des premières billes 12a lorsque la pièce 16 est dans sa première position.

On comprend donc que par une rotation selon la flèche F de la pièce 16 entraînant son passage de la première vers sa seconde position, lesdites billes peuvent être reçues simultanément dans les encoches 16B en libérant ledit organe de retenue 8. La longueur de l'arc de chaque encoche correspond au moins à la somme des diamètres de chaque jeu de billes.

Pour entraîner la rotation de la pièce 16 et son passage de la première vers sa seconde position, les moyens de commande 11 comprennent, outre la pièce 16, un ressort de torsion précontraint 21, dont les extrémités sont respectivement liées au corps 18 et à la pièce 16, et un maneton 22 fixé à la pièce 16 et faisant saillie radialement du corps 18 en étant relié à la structure 4 par l'intermédiaire de moyens de rupture 23 commandables à distance, qui seront décrits ultérieurement.

Plus particulièrement, sur la figure 2, on peut voir qu'un trou borgne 18C est ménagé radialement dans la paroi latérale 18D, délimitant la cavité cylindrique 18B du corps 18, et il reçoit l'une des extrémités du ressort de torsion 21, dont l'autre extrémité s'engage dans un trou borgne 16C ménagé dans la face transversale 16D de la pièce 16, opposée à celle recevant les billes 12. Le maneton 22 est fixé par vissage dans un trou taraudé 16E prévu radialement à la périphérie de la pièce cylindrique formant came 16, en traversant radialement une lumière 18K ménagée dans le corps 18.

Par ailleurs, pour faciliter la rotation de la pièce formant came 16, celle-ci est montée rotative sur une butée à billes 24, qui est disposée dans un évidement 18F ménagé dans la face transversale 16D de la pièce 16 en y étant maintenue par une vis 25 s'engageant dans un trou taraudé 18G du corps 18.

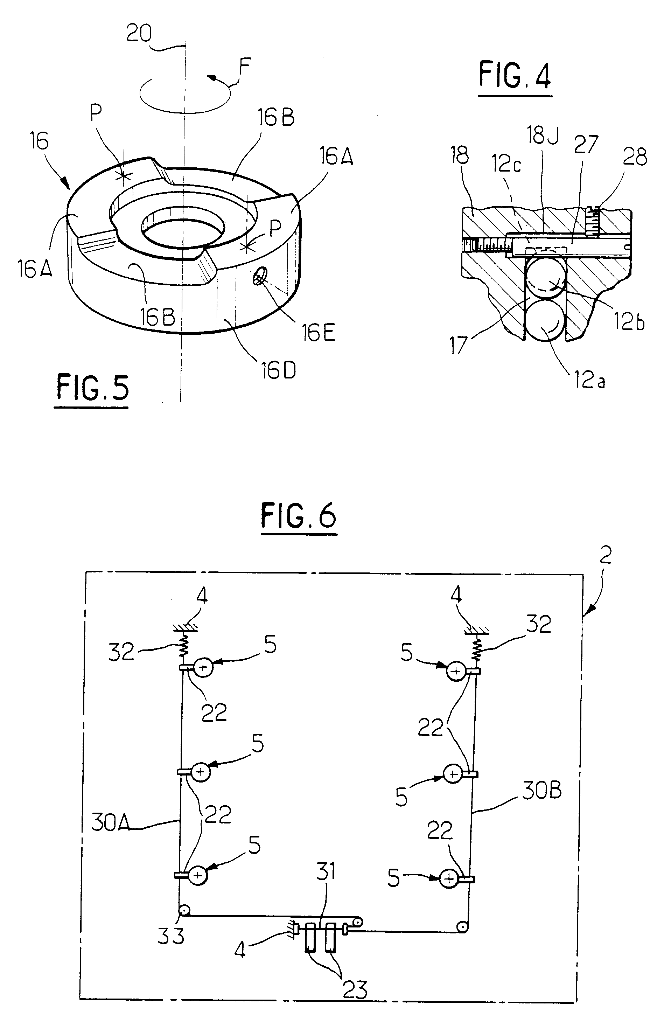

De plus, il est prévu des moyens pour régler la position des billes dans leurs passages respectifs 17. Ainsi, sur la figure 2, deux vis 26, logées dans des trous taraudés radiaux et opposés 18H du corps 18, permettent d'agir, selon une direction radiale à l'organe de retenue, respectivement sur les billes 12b des jeux, situées dans les coudes respectifs des passages, pour assurer le contact ponctuel entre les billes 12b et 12c de chaque jeu et pour régler l'engagement des billes 12c dans les empreintes. Par ailleurs, sur les figures 2 et 4, deux vis à excentriques 27, logées transversalement dans des orifices respectifs 18J du corps, agissent également sur les billes intermédiaires 12b, selon une direction parallèle à l'organe de retenue, pour assurer le contact ponctuel entre les billes 12b et 12a de chaque jeu. Deux vis de blocage 28 immobilisent dans la position souhaitée les vis à excentrique 27. La vis 25, maintenant la butée 24 contre la pièce 16, assure de plus le positionnement axial de la pièce et donc des billes dans les passages.

Ainsi, par ces différentes vis de réglage, les billes de chaque jeu sont alors ponctuellement au contact l'une de l'autre et au contact de l'empreinte correspondante 14 et de la face transversale 16A de la pièce 16, en garantissant de plus une évacuation sûre et fiable des jeux de billes dans les encoches respectives lors du passage de la pièce formant came de sa première vers sa seconde position.

Par ailleurs, lorsque les panneaux solaires équipant les satellites présentent une grande dimension, il est nécessaire de prévoir un ensemble de systèmes pour les maintenir en position repliée.

Ainsi, comme le montre schématiquement la figure 6, six systèmes conformes à l'invention peuvent avantageusement être montés sur la structure 4 du satellite pour verrouiller chaque ensemble de panneaux.

Dans cet exemple de réalisation, les six systèmes sont répartis en deux groupes de trois.

Trois systèmes 5 sont reliés entre eux par leurs manetons 22 au moyen d'un câble 30A ; de même, trois systèmes 5 sont reliés entre eux par leurs manetons 22 au moyen d'un câble 30B. L'une des extrémités des câbles 30A et 30B est reliée à une extrémité d'un câble unique 31 dont l'autre extrémité est fixée à la structure 4. Sur ce câble unique 31 sont prévus les moyens de rupture 23, tels que, dans ce cas, deux dispositifs pyrotechniques connus en soi. Quant aux autres extrémités des câbles 30A et 30B, elles sont reliées à la structure 4 du satellite par l'intermédiaire de ressorts de traction respectifs 32. Les câbles 30A et 30B, guidés autour de poulies 33, ainsi que le câble 31, sont alors tendus.

Dans cette application, le fonctionnement de l'ensemble des systèmes 5 selon l'invention est le suivant. Après que le satellite 1 est mis sur orbite, les dispositifs pyrotechniques 23 sont actionnés engendrant la rupture du câble unique 31 et, par conséquent, le relâchement des câbles 30A et 30B solidaires du câble 31. A ce moment, les ressorts de torsion 21, initialement précontraints, de chaque groupe de systèmes 5, qui sont reliés aux pièces formant came 16 solidaires des manetons 22, se détendent spontanément, entraînant simultanément le pivotement des pièces rotatives 16 et des manetons 22 dans leurs lumières respectives. De la sorte, les billes 12a, 12b et 12c de chaque jeu s'effacent des passages coudés 17 pour être reçues dans les encoches 16B, sous l'action des organes de retenue 8 tirés vers l'extérieur par des moyens élastiques moteurs non représentés, connus en soi.

Simultanément, les ensembles de panneaux solaires se déploient spontanément sous l'action des ressorts incorporés dans leurs articulations.

Les figures 7 et 8 montrent la seconde position de la pièce formant came d'un des systèmes de maintien après l'actionnement des dispositifs pyrotechniques. On a représenté en traits mixtes la position initiale de l'organe de retenue 8 et en traits pleins une position transitoire qu'il occupe, selon la direction F1, sous l'action des moyens élastiques moteurs, après l'éloignement des billes 12 reçues dans les encoches 16B de la pièce 16.

Par ailleurs, on remarque que les ressorts de traction 32 participent, avec les ressorts de torsion 21, au pivotement des pièces formant came puisqu'ils ont tendance à ramener les manetons par les câbles 30A et 30B.

## Revendications

1. Système pour maintenir, en position repliée, un ensemble d'éléments, tels que des panneaux solaires d'engins spatiaux, articulés entre eux et sur une structure, et susceptibles d'occuper soit ladite position repliée, pour laquelle lesdits éléments forment un empilement, soit une position déployée, pour laquelle lesdits éléments sont alignés les uns au bout des autres, ledit système (5) comprenant :
- un organe de retenue (8) traversant lesdits éléments en position repliée et relié par la première de ses extrémités (8A) à ladite structure (4) et venant, par sa seconde extrémité (8B), en appui contre l'élément externe dudit ensemble ;
- des moyens de verrouillage (10) dudit organe de retenue en position repliée desdits éléments ; et,
- des moyens de commande (11) pour déverrouiller lesdits moyens de verrouillage (10) et libérer ledit organe de retenue (8), permettant audit ensemble d'éléments de passer de la position repliée à la position déployée, caractérisé en ce que lesdits moyens de verrouillage (10) comprennent une pluralité de billes (12) régulièrement réparties autour de la première extrémité (8A) dudit organe de retenue (8) et s'engageant respectivement dans des empreintes sphériques (14) ménagées autour de ladite première extrémité (8A), et en ce que lesdits moyens de commande (11) comportent une pièce formant came (16), coaxiale audit organe de retenue et susceptible d'occuper une première position, pour laquelle lesdites billes (12) sont pressées ponctuellement par la pièce formant came (16) dans les empreintes sphériques (14) dudit organe de retenue (8) en le verrouillant, et, une seconde position, pour laquelle les billes (12) sont éloignées des empreintes sphériques (14) dudit organe de retenue en le libérant.

2. Système selon la revendication 1,
caractérisé en ce que deux jeux identiques de n billes (12a,12b et 12c) montées en série sont disposés de façon diamétralement opposée l'un de l'autre par rapport audit organe de retenue (8) et coopèrent respectivement, dans la première position de la pièce formant came (16), avec deux empreintes sphériques (14) ménagées en opposition autour de ladite première extrémité de l'organe de retenue.

3. Système selon l'une des revendications 1 ou 2,
caractérisé en ce que lesdites billes de verrouillage sont logées dans des passages (17) ménagés dans un corps (18) qui est fixé à ladite structure (4) et dans lequel sont agencées la pièce formant came (16) et la première extrémité (8A) de l'organe de retenue, chacun des passages (17) débouchant d'une part, en regard de ladite pièce formant came (16) et, d'autre part, en regard de l'empreinte sphérique correspondante (14).

4. Système selon les revendications 2 et 3,
caractérisé en ce que les deux jeux de billes sont respectivement reçus dans deux passages coudés symétriques l'un de l'autre par rapport à l'organe de retenue, la première bille (12a) de chaque jeu étant au contact ponctuel de la pièce formant came (16) selon une direction parallèle à l'organe de retenue, tandis que la dernière bille (12c) de chaque jeu est appliquée contre l'empreinte sphérique correspondante (14) selon une direction radiale à l'organe de retenue, lorsque la pièce formant came est dans sa première position.

5. Système selon l'une quelconque des revendications 1 à 4,
caractérisé en ce que ladite pièce formant came (16) présente une forme cylindrique dont l'une des faces transversales (16A), orthogonale à l'organe de retenue, est pourvue d'encoches (16B) régulièrement réparties, lesdites billes de verrouillage (12), lorsque la pièce formant came occupe sa première position, étant appliquées sur ladite face (16A), tandis que, lorsque ladite pièce formant came (16) est commandée en rotation pour passer de sa première à sa seconde position, lesdites billes (12) s'effacent simultanément pour être reçues dans lesdites encoches (16B) en libérant ledit organe de retenue.

6. Système selon la revendication 5,
caractérisé en ce que la longueur de l'arc de chaque encoche (16B) correspond au moins à la somme des diamètres de chaque jeu de billes.

7. Système selon l'une quelconque des revendications précédents 1 à 6,
caractérisé en ce que lesdits moyens de commande (11) comprennent, de plus, un ressort de torsion (21) lié à ladite pièce formant came (16) et à ladite structure (4), et, un maneton (22) fixé radialement à la pièce formant came (16) et relié à la structure par l'intermédiaire de moyens de rupture commandables (23).

8. Système selon l'une quelconque des revendications précédentes 1 à 7,
caractérisé en ce que ladite pièce formant came (16) est montée rotative sur une butée à billes (24).

9. Système selon la revendication 8,
caractérisé en ce que ladite butée à billes (24) coopère avec l'autre face transversale (16D) de la pièce formant came, opposée à celle présentant lesdites encoches.

10. Système selon l'une des revendications 1 à 9,
caractérisé en ce que lesdites empreintes sphériques (14) sont ménagées sur un embout (15) rapporté sur la première extrémité (8A) dudit organe de retenue.

11. Système selon l'une quelconque des revendications précédentes 3 à 10,
caractérisé en ce que des moyens pour régler la position des billes (12) dans les passages (17) sont prévus sur ledit corps ( 18 ).

12. Système selon la revendication 11,
caractérisé en ce que lesdits moyens de réglage sont constitués par une pluralité de vis (25,26,27) liées au corps et destinées à agir sur les billes, deux desdites vis (26,27), disposées orthogonalement l'une de l'autre, agissant, selon respectivement des directions radiale et axiale à l'organe de retenue, sur la bille (12b) de chaque jeu située dans l'angle du passage coudé correspondant (17), de façon que les billes (12a,12b,12c) de chaque jeu soient ponctuellement au contact les unes des autres.

13. Ensemble de systèmes (5) du type défini selon l'une des revendications précédentes 1 à 12, répartis sur ladite structure pour maintenir en position repliée lesdits éléments, tels que des panneaux solaires d'engins spatiaux, caractérisé en ce que les moyens pour la commande (11) des moyens de verrouillage (10) desdits systèmes (5) sont associés les uns aux autres par au moins un câble (30) lié à la structure (4) et comportant des moyens de rupture (23).

14. Ensemble selon la revendication 13,
caractérisé en ce que ledit câble (30) est relié à l'ensemble des manetons (22) desdits systèmes (5), de sorte que, lorsque ledit câble est rompu sous l'action des moyens de rupture, les ressorts de torsion (21) desdits systèmes entraînent simultanément en rotation les pièces formant came (16) et l'éloignement des billes (12) des empreintes sphériques (14) ménagées dans lesdits organes de retenue (8).

15. Ensemble selon l'une des revendications 13 ou 14,
caractérisé en ce que deux groupes de systèmes (5) sont prévus sur ladite structure pour maintenir en position repliée lesdits éléments, et ils sont chacun commandés par un câble respectif (30A,30B), lesdits câbles étant reliés par une de leurs extrémités à un câble unique (31) sur lequel sont agencés lesdits moyens de rupture (23), tandis que leurs autres extrémités sont reliées à ladite structure par l'intermédiaire de ressorts de traction respectifs (32).

## Patentansprüche

1. System, um ein Komplex von Elementen, wie Solarpanels von Raumflugkörpern, die miteinander und auf einer Struktur angelenkt sind und geeignet, entweder eine zusammengeklappte Lage, in welcher die besagten Elemente einen Stapel bilden, oder eine ausgeklappte Lage, bei welcher die besagten Elemente in einer Reihe aufgestellt sind, einzunehmen, in der besagten zusammengeklappten Lage zu halten, wobei das System (5) folgendes enthält:
- ein Festhalteorgan (8), das die besagten Elemente in zusammengeklappter Lage durchquert und mit dem ersten seiner Enden (8A) mit der besagten Struktur (4) verbunden ist und sich mit seinem zweiten Ende (8B) auf dem äußeren Element des besagten Komplexes abstützt;
- Verriegelungsmittel (10) für das besagte Festhalteorgan in zusammengeklappter Lage des besagten Elements; und
- Steuermittel (11) zum Entriegeln der besagten Verriegelungsmittel (10) und Freigeben des besagten Festhalteorgans (8), um so dem besagten Komplex von Elementen zu gestatten, aus der zusammengeklappten Lage in die ausgeklappte Lage zu gelangen,
dadurch gekennzeichnet, daß die besagten Verriegelungsmittel (10) eine Vielzahl von Kugeln (12) enthält, die regelmäßig um das erste Ende (8A) des besagten Festhalteorgans (8) verteilt sind und jeweils in die sphärischen Vertiefungen (14), welche um das erste Ende (8A) herum angeordnet sind, eingreifen, und daß die besagten Steuermittel (11) ein Teil enthalten, das eine Nocke (16) bildet, das koaxial zu dem besagten Festhalteorgan angeordnet ist und eine erste Stellung einnehmen kann, bei welcher die besagten Kugeln (12) in punktkontakt durch das eine Nocke bildende Teil (16) in die sphärischen Vertiefungen (14) des besagten Festhalteorgans (8) gedrückt werden und es verriegeln, und eine zweite Stellung, bei welcher die Kugeln (12) sich aus den sphärischen Vertiefungen (14) des besagten Festhalteorgans entfernen und es freigeben.

2. System nach dem Anspruch 1,
dadurch gekennzeichnet, daß zwei gleiche Sätze von n Kugeln (12 a, 12 b und 12 c), die in Serie montiert sind, gegengleich dem besagten Festhalteorgan (8) angeordnet sind und jeweils in der ersten Stellung des eine Nocke bildenden Teils (16) mit zwei entgegengesetzt um das besagte erste Ende des Festhalteorgans angebrachten sphärischen Vertiefungen (14) zusammenwirken.

3. System nach einem der Ansprüche 1 oder 3,
dadurch gekennzeichnet, daß die besagte Verriegelungskugeln in Durchgängen (17) gelagert sind, welche in einem Körper (18) angebracht sind, der an der besagten Struktur (4) befestigt ist und in welchem das eine Nocke bildende Teil (16) und das erste Ende (8A) des Festhalteorgans untergebracht sind, wobei jeder der Durchgänge (17) einerseits gegenüber des besagten, eine Nocke bildenden Teils (16) mündet und, andererseits, gegenüber der entsprechenden sphärischen Vertiefung (14).

4. System nach den Ansprüchen 2 und 3,
dadurch gekennzeichnet, daß die beiden Kugelsätze jeweils in zwei gebogenen Durchgängen aufgenommen werden, welche in Bezug auf das Festhalteorgan gegeneinander symmetrisch sind, wobei die erste Kugel (12a) jedes Satzes sich in Punktkontakt mit dem eine Nocke bildenden Teil (16) in einer zum Festhalteorgan parallelen Richtung befindet, während die letzte Kugel (12c) jedes Satzes gegen die entsprechende sphärische Vertiefung (14) in einer zum Festhalteorgan radialen Richtung angesetzt ist, wenn das eine Nocke bildende Teil sich in seiner ersten Stellung befindet.

5. System nach irgendeinem der Ansprüche 1 bis 4,
dadurch gekennzeichnet, daß das eine Nocke bildende Teil (16) eine zylindrische Form aufweist wovon eine der Querflächen (16A), rechtwinklig zum Festhalteorgan, mit regelmäßig verteilten Kerben (16 B) versehen ist, wobei, wenn das eine Nocke bildende Teil sich in seiner ersten Stellung befindet, die besagten Verriegelungskugeln (12) an der besagten Fläche (16A) angesetzt sind, während, wenn das besagte eine Nocke bildende Teil (16) in Drehung gesteuert wird, um aus seiner ersten in seine zweite Stellung überzugehen, die besagten Kugeln (12) sich gleichzeitig zurückstellen, um von den besagten Kerben (16B) aufgenommen zu werden und das besagte Festhalteorgan freigeben.

6. System nach dem Anspruch 5,
dadurch gekennzeichnet, daß die Bogenlänge jeder Kerbe (16 B) mindestens der Summe der Durchmesser jedes Kugelsatzes entspricht.

7. System nach irgend einem der vorhergehenden Ansprüche 1 bis 6,
dadurch gekennzeichnet, daß die besagten Steuermittel (11) außerdem eine mit dem besagten eine Nocke bildenden Teil (16) und der besagten Struktur (4) verbundene Verdrehungsfeder (21), sowie einen Kurbelzapfen (22), der radial an dem eine Nocke bildenden Teil (16) angebracht und, über steuerbare Unterbrechungsmittel (23), mit der Struktur verbunden ist, enthalten.

8. System nach irgend einem der vorhergehenden Ansprüche 1 bis 7,
dadurch gekennzeichnet, daß das besagte, eine Nocke bildende Teil (16) drehbar auf einen Anschlag (24) mit Kugeln montiert ist.

9. System nach dem Anspruch 8,
dadurch gekennzeichnet, daß der besagte Anschlag mit Kugeln (24) mit der anderen Querfläche (16D) des eine Nocke bildenden Teils, die jener, welche die Kerben aufweist, gegenüberliegt, zusammenwirkt.

10. System nach einem der Ansprüche 1 bis 9,
dadurch gekennzeichnet, daß die besagten sphärischen Vertiefungen (14) an ein auf das erste Ende (8A) des besagten Festhalteorgans angebrachtes Ansetzstück (15) angeordnet sind.

11. System nach irgend einem der vorhergehenden Ansprüche 3 bis 10,
dadurch gekennzeichnet, daß Mittel zum Einstellen der Stellung der Kugeln (12) in den Durchgängen (17) auf dem besagten Körper (18) vorgesehen sind.

12. System nach dem Anspruch 11,
dadurch gekennzeichnet, daß die besagten Einstellmittel aus einer Vielzahl von Schrauben (25, 26, 27) bestehen, welche mit dem Körper verbunden sind und dazu bestimmt auf die Kugeln einzuwirken, wobei zwei der besagten Schrauben (26, 27), die rechtwinklig zueinander angeordnet sind, nach der jeweiligen radialen und axialen Richtung zum Festhalteorgan, auf die Kugel (12 b) jedes Satzes, die sich im Winkel des entsprechenden gebogenen Durchgangs (17) befindet, wirken, so daß die Kugeln (12 a, 12 b, 12 c) jedes Satzes in Punktkontakt zueinander stehen.

13. Systemkomplex (5) der nach einem der Ansprüche 1 bis 12 festgelegten Art, das über die ganzen Struktur verteilt ist, um die besagten Elemente, wie Solarpanels von Raumflugkörpern, in zusammengeklappter Lage zu halten,
dadurch gekennzeichnet, daß die Mittel zur Steuerung (11) der Verriegelungsmittel (10) der besagten Systeme (5) die einen mit den anderen durch wenigstens ein an die Struktur (4) angeschlossenes Kabel, welches Unterbrechungsmittel (23) enthält, verbunden sind.

14. Systemkomplex nach dem Anspruch 13,
dadurch gekennzeichnet, daß das besagte Kabel (30) mit dem Kurbelzapfenkomplex (22) der besagten Systeme (5) verbunden ist, so daß, wenn das besagte Kabel unter Einwirkung der Unterbrechungsmittel unterbrochen ist, die Verdrehungsfedern (21) der besagten Systeme gleichzeitig die eine Nocke bildenden Teile (16) in Drehung mitführen und das Entfernen der Kugeln (12) aus den sphärischen Vertiefungen (14) welche in den besagten Festhalteorgane (8) angebracht sind, verursachen.

15. Komplex nach einem der Ansprüche 13 oder 14,
dadurch gekennzeichnet, daß auf der besagten Struktur zwei Systemgruppen (5), um die besagten Elemente in zusammengeklappter Lage zu halten, vorgesehen sind und jede über ein entsprechendes Kabel (30A, 30B) gesteuert wird, wobei besagte Kabel mit einem ihrer Enden an ein einziges Kabel (31) befestigt sind, auf welchem die besagten Unterbrechungsmittel (23) angeordnet sind, während ihre anderen Enden über jeweilige Zugfedern (32) mit der besagten Struktur verbunden sind.

## Claims

1. A system for maintaining in a folded position a set of elements that are hinged to one another and to a structure (such as solar panels on a spacecraft), which elements are capable of occupying either said folded position in which said elements form a stack, or else a deployed position in which said elements are in end-to-end alignment, said system (5) comprising:
a retaining member (8) passing through said elements in the folded position and connected by a first one of its ends (8A) to said structure (4) and bearing via a second one of its ends (8B) against the outermost element of said set;
locking means (10) for locking said retaining member in the folded position of said elements; and
control means (11) for unlocking said locking means (10) and releasing said retaining member (8), thereby enabling said set of elements to pass from the folded position to the deployed position;
characterized in that said locking means (10) comprise a plurality of balls (12) regularly distributed around the first end (8A) of said retaining member (8) and engaging in respective spherical depressions (14) formed around said first end (8A); and in that said control means (11) comprise a cam-forming piece (16) coaxial with said retaining member and capable of occupying a first position in which said balls (12) are urged with point contact by the cam-forming piece (16) into the spherical depressions (14) of said retaining member (8), thereby locking it, and a second position in which the balls (12) are moved away from the spherical depressions (14) of said retaining member, thereby releasing it.

2. A system according to claim 1, in which two identical sets of n balls (12a, 12b and 12c) mounted in series are disposed diametrically opposite each other about said retaining member (8) with each set of balls co-operating, in the first position of the cam-forming piece (16), with a respective one of opposite spherical depressions (14) formed around said first end of the retaining member.

3. A system according to claim 1 or 2, characterized in that said locking balls are housed in passages (17) formed through a body (18) which is fixed to said structure (4) and in which the cam-forming piece (16) and the first end (8A) of the retaining member are disposed, each of the passages (17) opening out firstly facing said cam-forming piece (16) and secondly facing the corresponding spherical depression (14).

4. A system according to claims 2 and 3, characterized in that the two sets of balls are received in two respective angled passages that are symmetrical to each other about the retaining member, such that, when the cam-forming piece is in its first position, the first ball (12a) of each set being in point contact with the cam- forming piece (16) in a direction parallel to the retaining member, while the last ball (12c) in each set is pressed against the corresponding spherical depression (14) in a direction radial to the retaining member.

5. A system according to any one of claims 1 to 4, characterized in that said cam-forming piece (16) is cylindrical in shape with one of its transverse faces orthogonal to the retaining member being provided with regularly spaced-apart notches (16B), said locking balls (12) being pressed against said transverse face (16A) when the cam-forming piece (16) is in its first position, and when said cam-forming piece (16) is controlled to rotate to pass from its first position to its second position, said balls (12) withdraw simultaneously to be received in said notches (16B), thereby releasing said retaining member.

6. A system according to claim 5, characterized in that the arc length of each notch (16B) corresponds to not less than the sum of the diameters of each set of balls.

7. A system according to any one of preceding claims 1 to 6, characterized in that said control means (11) further include a torsion spring (21) connected to said cam-forming piece (16) and to said structure (4), and a pin (22) fixed radially to said cam-forming piece (16) and connected to the structure via controllable rupture means (23).

8. A system according to any one of preceding claims 1 to 7, characterized in that said cam-forming piece (16) is mounted to rotate on a ball abutment (24).

9. A system according to claim 8, characterized in that said ball abutment (24) co-operates with the other transverse face (16D) of said cam-forming piece opposite to its face having said notches.

10. A system according to any one of claims 1 to 9, characterized in that said spherical depressions (14) are provided on an endpiece (15) applied to the first end (8A) of said retaining member.

11. A system according to any one of preceding claims 3 to 10, characterized in that adjustment means are provided on said body (18) for adjusting the positions of the balls (12) in the passages (17).

12. A system according to claim 11, characterized in that said adjustment means are constituted by a plurality of screws (25, 26, 27) engaging the body and intended to bear on the balls, two of said screws (26, 27) disposed orthogonally to each other acting respectively in a radial direction and in an axial direction relative to the retaining member on that one of the balls (12b) in each set of balls which is situated at the angle in the corresponding angled passage (17), in such a manner as to ensure that the balls in each set of balls (12a, 12b, 12c) make point contacts with one another.

13. A set of systems (5) as defined in any of the preceding claims 1 to 12, distributed over said structure to maintain said elements in folded position (such as solar panels on a spacecraft), characterized in that the control means (11) for controlling the locking means (10) of said systems (5) are associated with one another by at least one cable (30) connected to the structure (4) and including rupture means (23).

14. A set according to claim 13, characterized in that said cable (30) is connected to each of the pins (22) of said systems (5) in such a manner that when said cable is ruptured under the action of the rupture means, the torsion springs (21) of said systems rotate the cam-forming pieces (16) simultaneously, causing the balls (12) to move away from the spherical depressions (14) formed in said retaining members (8).

15. A set according to claim 13 or 14, characterized in that two groups of systems (5) are provided on said structure for maintaining said elements in folded position, each group being controlled by a respective cable (30A, 30B), one end of each of said cables being connected to a common cable (31) on which said rupture means (23) are disposed, while the other ends of said cables are connected to said structure via respective traction springs (32).
